# EUROPÄISCHE PATENTSCHRIFT

(11) **EP 3 430 285 B1**
(45) Veröffentlichungstag und Bekanntmachung des Hinweises auf die Patenterteilung: **07.06.2023**
(21) Anmeldenummer: 17713200.8
(22) Anmeldetag: 17.03.2017
(51) Int. Cl.: F16H 7/02, F16H 55/17

(54) **ZAHNRIEMENANTRIEB MIT KRAFTMITNEHMERN**
BELT DRIVE COMPRISING DRIVING ELEMENTS
TRANSMISSION PAR COURROIE CRANTÉE COMPORTANT DES MOYENS D'ENTRAÎNEMENT MÉCANIQUE

(30) Priorität: 18.03.2016 DE 202016001776 U
(43) Veröffentlichungstag der Anmeldung: 23.01.2019
(73) Patentinhaber: Bode - Die Tür GmbH, 34123 Kassel (DE)
(72) Erfinder: LINNENKOHL, Lars, 34123 Kassel (DE)
(74) Vertreter: Patentanwälte Bauer Vorberg Kayser
(86) Internationale Anmeldenummer: PCT/EP2017/056400
(87) Internationale Veröffentlichungsnummer: WO 2017/158162

(56) Entgegenhaltungen:
- DE-A1- 3 312 615
- DE-A1- 4 003 490
- DE-C1- 3 233 891
- DE-C1- 19 824 252
- US-A- 4 705 469
- US-B1- 6 766 899

## Beschreibung

Die vorliegende Erfindung betrifft einen Zahnriemenantrieb mit einem Zahnriemen und einer Zahnscheibe zum Antrieb des Zahnriemens.

Zahnriemen weisen meist eine glatte Seite und eine Seite mit Zähnen auf. Üblicherweise befindet sich die glatte Seite außen, während die Innenseite des Zahnriemens mit den Zähnen versehen ist. Der Zahnriemen umschließt dabei die Zahnscheibe, wobei die Zähne des Zahnriemens in Zahnaussparungen der Zahnscheibe eingreifen, so dass die Zahnscheibe den Zahnriemen über die Zahnaussparungen und Zähne antreibt.

Zahnriemenantriebe werden oftmals für den Transport von horizontal zu transportierenden oder zu bewegenden Gegenständen verwendet. Derartige Zahnriemenantriebe sind grundsätzlich bekannt. Die DE 3233891 C1 beschreibt ein Riemengetriebe, insbesondere für Erntemaschinen, mit in Laufrichtung und senkrecht dazu im Querschnitt trapezförmigen Riemenzähnen. Die DE 3312615 A1 beschreibt ein Riemengetriebe für landwirtschaftliche Maschinen, wobei die Getriebe einen im Wesentlichen aus Gummi oder dergleichen bestehenden Riemen haben, der innen verzahnt ist und außen Mitnehmer aufweist. Die DE 40 03 490 A1 zeigt ein Fördersystem mit Paletten, aus denen etwa mittig ein Mitnehmer herausragt, dessen Klemmstück in eine Aussparung eines Zahnriemenrades eintauchen kann und könnte als nächstliegender Stand der Technik bezeichnet werden. Die DE 198 24 252 C1 beschreibt einen Zahnriemenantrieb mit ein Befestigungselement aufweisenden Mitnehmern und Aussparungen für diese Befestigungselemente aufweisenden Zahnscheiben. Insbesondere dienen Zahnriemenantriebe auch als Türantriebe zum Öffnen und Schließen von Fahrzeugtüren, insbesondere für Türen von Fahrzeugen des öffentlichen Nah- und Fernverkehrs.

Oftmals ist bei einem umlaufenden Zahnriemenantrieb nur eine der Zahnscheiben angetrieben, während die andere oder auch mehrere Zahnscheiben lediglich mitlaufen und den Zahnriemen umlenken.

Die Anbindung der zu fördernden bzw. zu transportierenden Elemente an den Zahnriemen erfolgt beispielsweise über Mitnehmer. Oftmals ergeben sich Probleme dadurch, dass die Befestigung der Mitnehmer am Zahnriemen nicht ausreicht, um hohe Antriebskräfte zu übertragen. Die Mitnehmer lösen sich aufgrund von Belastungsspitzen oder im Laufe des Betriebs, was Reparaturaufwand und Kosten verursacht.

Zahnriemen bestehen üblicherweise aus Kunststoffmaterial, das durch längs verlaufende Seile oder Drähte verstärkt ist. Die zur Aufnahme der Zugkräfte wesentlichen Seile oder Drähte dürfen durch das Anbringen der Mitnehmer nicht beschädigt werden, da ansonsten die Stabilität und Reißfestigkeit des Zahnriemens beeinträchtigt wird. Auch hierdurch ist die Kraftübertragung auf anzutreibende oder mitzunehmende Elemente über Mitnehmer begrenzt.

Ein weiteres Problem besteht darin, dass eine Kraftübertragung nur entlang der Längserstreckung des Zahnriemens, also in x-Richtung erfolgt. Eine Umlenkung des über Mitnehmer angetriebenen Elements beispielsweise über Führungsschienen ist zwar möglich, verursacht aber einen hohen Verlust an Antriebsenergie durch die Aufteilung der Krafteinleitung in eine x-Komponente, (parallel zur Bewegungsrichtung des Zahnriemens) und eine y-Komponente (quer zur Bewegungsrichtung des Zahnriemens).

Dieses Problem ergibt sich z.B. bei Schwenkschiebetüren, die parallel und abschnittsweise schräg zur Fahrzeugaußenwand verschoben werden und in einer gekrümmt verlaufenden Führungsbahn geführt sind. Der Antrieb erfolgt über einen Zahnriemenantrieb, wobei die Tür über einen Mitnehmer mit dem Zahnriemen verbunden ist. Aufgrund des geraden Verlaufs des Zahnriemens wird die Antriebskraft nur in eine Richtung (x-Richtung) eingeleitet, aber im Bewegungsverlauf aufgrund der gekrümmt verlaufenden Führungsschiene in eine x-Komponente und eine y-Komponente (quer zur x-Richtung) aufgeteilt. Durch diese Aufteilung ergeben sich erhebliche Verluste der Antriebsenergie.

Die Aufgabe der vorliegenden Erfindung besteht darin, die oben genannten Nachteile des Standes der Technik durch einen verbesserten Zahnriemenantrieb zu vermeiden. Insbesondere soll die Nutzung der Antriebsenergie verbessert und ein dauerhafter und wartungsarmer Betrieb des Zahnriemenantriebs gewährleistet werden.

Erfindungsgemäß wird die Aufgabe durch einen Zahnriemenantrieb mit den Merkmalen des Patentanspruchs 1 gelöst.

Die erfindungsgemäße Zahnscheibe mit Zahnaussparungen zur Mitnahme von Zähnen des Zahnriemens und Kraftmitnehmeraussparungen zur Mitnahme des mindestens einen Kraftmitnehmers treibt üblicherweise nicht an, sondern lenkt den Zahnriemen lediglich um. Im Rahmen der Erfindung kann aber auch diese Zahnscheibe als antreibende Zahnscheibe ausgelegt sein. Dann wird die Antriebskraft von der Zahnscheibe auf den Zahnriemen bzw. das anzutreibende Element nicht nur auf die Zähne des Zahnriemens, sondern auch auf den mindestens einen Kraftmitnehmer übertragen, der in entsprechenden Kraftmitnehmeraussparungen der Zahnscheibe ist.

Insbesondere können mehrere Kraftmitnehmer gemeinsam das anzutreibende Element bewegen. Befinden sich mehrere Kraftmitnehmer gleichzeitig in Kraftmitnehmeraussparungen der Zahnscheibe, wird der Zahnriemen erheblich entlastet, da sich die Kräfte auf die mehreren Kraftmitnehmer verteilen. Dies ist auch deswegen vorteilhaft, weil durch die Führung der Kraftmitnehmer über die Zahnscheibe ein Richtungswechsel aus der zuvor ausschließlich vorherrschenden Richtungskomponente in x-Richtung erfolgen kann. Richtungswechsel sind oft mit dynamischen Belastungsspitzen verbunden, die durch die unmittelbare Verbindung der Kraftmitnehmer mit der Zahnscheibe aufgenommen und kompensiert werden können. Die Umlenkung der Richtung über die Zahnscheibe kann dabei entsprechend üblichen Zahnriemenantrieben um wenige Grad bis hin zu einem vollständigen Richtungswechsel von 180° erfolgen.

In einer besonders vorteilhaften Ausführungsvariante ist der Kraftmitnehmer ausschließlich durch Klemmung an dem Zahnriemen befestigt. Die Klemmverbindung hat den wesentlichen Vorteil, dass die Struktur des Zahnriemens durch die Befestigung nicht verändert wird. Insbesondere bleiben die für die Zugfestigkeit wesentlichen Seile oder Drähte im Inneren des Zahnriemens intakt.

Um eine Klemmverbindung gewährleisten zu können, ist der Kraftmitnehmer vorzugsweise in eine Oberseite und eine Unterseite unterteilt, zwischen denen im befestigten Zustand der Zahnriemen angeordnet ist. Die Unterseite ist dabei auf der verzahnten Seite des Zahnriemens angeordnet und kann zur verbesserten Kraftübertragung in x-Richtung eine dem Zahnriemen zugewandte Innenseite aufweisen, die mit den Zähnen des Zahnriemens korrespondiert. Beispielsweise kann das Unterteil eine gezackte Kontur aufweisen, in der Zähne des Zahnriemens zur Anlage kommen. Dies führt zu einer kraftformschlüssigen Verbindung des Kraftmitnehmers mit dem Zahnriemen.

Die Verbindung des Oberteils und des Unterteils kann durch beliebige geeignete Mittel erfolgen. Es hat sich als vorteilhaft erwiesen, wenn der Kraftmitnehmer eine Länge aufweist, die eine Breite des Zahnriemens (quer zur Längserstreckung) übersteigt. Die Länge des Kraftmitnehmers ist in am Zahnriemen befestigten Zustand quer zur Laufrichtung bzw. Längserstreckung des Zahnriemens angeordnet. Verbindungselemente, beispielsweise Schrauben verbinden das Oberteil mit dem Unterteil, wobei die Schrauben seitlich des Zahnriemens angeordnet sind und diesen nicht durchdringen.

Der Kraftmitnehmer bildet auch ein Verbindungselement aus, das mit dem anzutreibenden Element verbindbar ist. Vorzugsweise ist ein Überstand vorgesehen, der mit dem antreibenden Element oder einem zusätzlichen Verbindungszwischenelement verbindbar ist. Ein solcher Überstand kann beispielsweise durch einen zylindrischen Achsstummel gebildet sein. Ein Achsstummel ist deshalb besonders geeignet, weil dieser eine schwenk- oder drehbare Verbindung mit dem anzutreibenden Element oder dem dazwischen angeordneten Verbindungszwischenelement erlaubt. Die Schwenk- oder Drehbarkeit zwischen dem Verbindungselement und dem anzutreibenden Element ist notwendig, um das anzutreibende Element entlang des Umfangs der Zahnscheibe führen zu können, wenn diese den Kraftmitnehmer umlenkt. Die Schwenk- oder Drehbarkeit muss aber nicht zwangsläufig durch den Kraftmitnehmer bzw. das Verbindungselement selbst gewährleistet sein, möglich ist auch eine starre Verbindung an dieser Stelle, wenn die Schwenk- oder Drehbarkeit an anderer Stelle zwischen dem Kraftmitnehmer und dem anzutreibenden Element realisiert wird.

In einer besonders einfachen bevorzugten Ausführungsvariante ist der Kraftmitnehmer als im Wesentlichen zylindrisches Element ausgebildet, wobei ein seitlicher Überstand über die Breite des Zahnriemens, also ein endseitiger Achsstummel als Verbindungselement dient. Dabei kann der Kraftmitnehmer nur ein einziges Verbindungselement an einer Seite des Zahnriemens oder auch zwei Verbindungselemente beidseitig des Zahnriemens aufweisen.

Erfindungsgemäß kann die Kraftübertragung auf das anzutreibende Element dadurch weiter verbessert werden, dass mehrere Kraftmitnehmer nebeneinander am Zahnriemen angeordnet sind, die mit einem einzigen anzutreibenden Element verbunden sind. Eine zusätzliche Verbindungsplatte verbindet dabei die mindestens zwei Kraftmitnehmer derart, dass Zugkräfte von einem Kraftmitnehmer auf den benachbarten Kraftmitnehmer über die Verbindungsplatte übertragen werden können. Die Verbindungsplatte muss zu diesem Zweck schwenk- oder drehbar an einem der beiden Kraftnehmer befestigt sein und weist ein gekrümmtes Langloch auf, in das sich ein Kraftübertragungsabschnitt des benachbarten Kraftmitnehmers hinein erstreckt. Der Kraftübertragungsabschnitt kann durch das Verbindungselement gebildet sein, also beispielsweise durch einen Achsstummel, der sich durch das gekrümmte Langloch hindurch erstreckt. Das gekrümmte Langloch ist deshalb notwendig, weil ansonsten eine Umlenkung des Zahnriemens über die Zahnscheibe nicht möglich wäre.

Um die Kraftübertragung auf das anzutreibende Element weiter zu verbessern, kann vorzugsweise eine ungerade Anzahl an Kraftmitnehmern vorgesehen sein, die über die Verbindungsplatte miteinander verbunden sind. Die Verbindungsplatte ist schwenk- oder drehbar am mittleren Kraftmitnehmer befestigt, wobei sich Kraftübertragungsabschnitte der benachbarten Kraftmitnehmer in entsprechende gekrümmte Langlöcher erstrecken. Lediglich der mittlere Kraftmitnehmer ist dabei über sein Verbindungselement mit dem anzutreibenden Element verbunden, so dass sich auftretende Kräfte über die Verbindungsplatte auf sämtliche verbundenen Kraftmitnehmer verteilen. Es haben sich beispielsweise Gruppierungen von drei oder fünf Kraftmitnehmern, die über eine Verbindungsplatte miteinander verbunden sind, als besonders geeignet erwiesen. Vorteilhafterweise erhöht sich die Spannung innerhalb des Zahnriemens durch die Verbindung der Kraftmitnehmer untereinander bei Kontakt mit der Zahnscheibe nicht.

Die Erfindung wird anhand der nachfolgenden Figuren näher erläutert. Die Figuren zeigen nur bevorzugte Ausführungsmerkmale und sollen die Erfindung nicht auf diese beschränken.

Es zeigen:
- Fig. 1:: einen Zahnriemenabschnitt mit einem erfindungsgemäßen Kraftmitnehmer,
- Fig. 2:: eine Schnittdarstellung eines Zahnriemenabschnitts mit befestigtem Kraftmitnehmer,
- Fig. 3:: eine seitliche Ansicht einer erfindungsgemäßen Zahnscheibe mit einem Zahnriemenabschnitt und drei Kraftmitnehmern,
- Fig. 4:: die seitliche Ansicht gemäß Fig. 3, zusätzlich mit einer erfindungsgemäßen Verbindungsplatte.

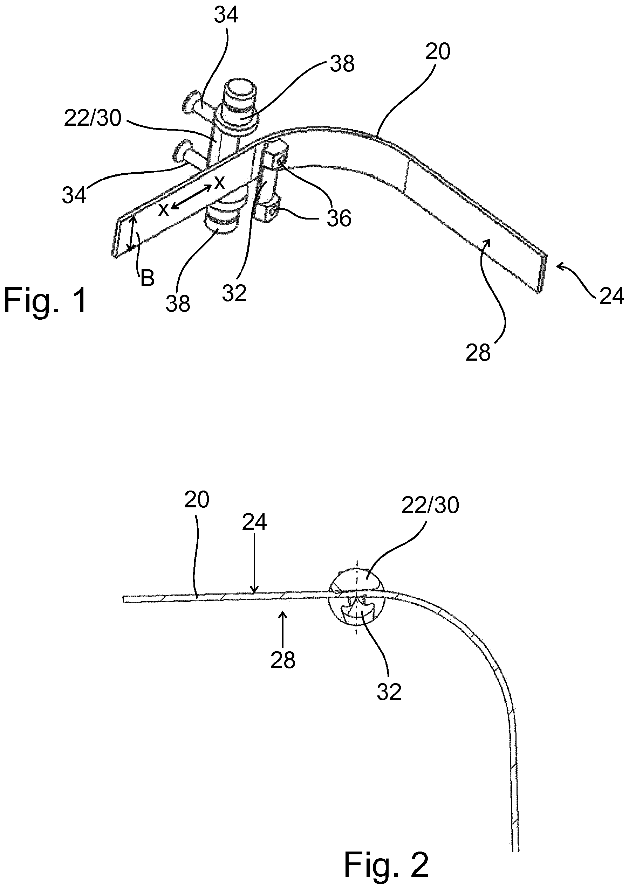

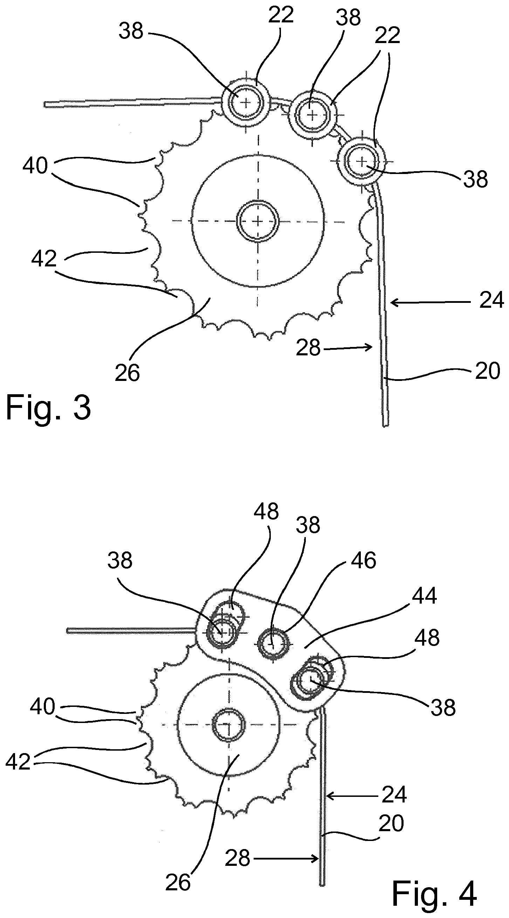

Figur 1 zeigt einen Abschnitt eines Zahnriemens 20, an dem ein erfindungsgemäßer Kraftmitnehmer 22 befestigt ist. Der Zahnriemen weist eine Außenseite 24 und eine einer Zahnscheibe 26 (vergl. Figur 3 und 4) zugewandte Innenseite 28 auf. Die Innenseite 28 weist üblicherweise Zähne auf, die in den Figuren nicht gezeigt sind.

Der Kraftmitnehmer 22 ist durch einen im Wesentlichen zylindrisch ausgeformten Körper gebildet, der zweigeteilt ist und ein Oberteil 30 und ein Unterteil 32 aufweist. Das Oberteil 30 und das Unterteil 32 sind im gezeigten Ausführungsbeispiel über Verbindungsmittel 34, vorzugsweise Klemmschrauben, miteinander derart verbunden, dass der Zahnriemen 20 zwischen ihnen angeordnet ist. Dabei ist das Unterteil 32 auf der Innenseite 28 und das Oberteil 30 auf der Außenseite 24 des Zahnriemens angeordnet. Nicht gezeigt ist eine gezackte Innenfläche des Unterteils 32, das den Zähnen des Zahnriemens 20 zugewandt ist und mit diesen korrespondiert. Die Zähne kommen in entsprechend geformten Vertiefungen der Innenseite des Unterteils 32 zur Anlage, so dass es zu einer kraftormschlüssigen Verbindung des Kraftmitnehmers 22 mit dem Zahnriemen 20 kommt.

Im gezeigten Ausführungsbeispiel weist das Unterteil 32 Öffnungen 36 auf, in die die Verbindungsmittel 34 einführbar, vorzugweise einschraubbar sind. Die Verbindungsmittel 34, dargestellt als Klemmschrauben, verlaufen seitlich des Zahnriemens 20 und durchdringen diesen nicht. Der Kraftmitnehmer 22 weist eine Länge auf, die die Breite B des Zahnriemens 20 entsprechend übersteigt.

Weiterhin erkennbar sind zwei Verbindungselemente 38, die als Achsstummel ausgebildet sind und bezogen auf eine Breite B des Zahnriemens seitlich gegenüber diesem vorstehen. Anstelle der beiden jeweils seitlich vorstehenden Verbindungselemente 38 kann auch nur ein einziges Verbindungselement 38 vorgesehen sein. Die Verbindungselemente 38 stellen sozusagen eine Verlängerung des Kraftmitnehmers 22 in seiner Längsrichtung dar, die im befestigten Zustand parallel zur Breite des Zahnriemens B bzw. quer zu einer Längserstreckung X-X des Zahnriemens verläuft.

Figur 2 verdeutlicht die Anordnung des Kraftmitnehmers 22 in einer Schnittdarstellung auf dem Zahnriemen 20.

Figur 3 zeigt eine bevorzugte Ausführungsvariante, bei der drei benachbarte Kraftmitnehmer 22 an dem Zahnriemen 20 angeordnet sind. Weiterhin ist erkennbar, dass die Zahnscheibe 26 zum einen Zahnaussparungen 40 zur Auf- und Mitnahme der Zähne des Zahnriemens 20, als auch Kraftmitnehmeraussparungen 42 zur Auf- und Mitnahme der Kraftmitnehmer 22 aufweist. Treibt die Zahnscheibe 26 den Zahnriemen an und befinden sich die Kraftmitnehmer 22 in den Kraftmitnehmeraussparung 42, wird die Antriebskraft der Zahnscheibe 26 unmittelbar auf diese übertragen.

Aus Figur 4 wird eine weitere vorteilhafte Weiterentwicklung der Erfindung deutlich. Gezeigt ist eine Verbindungsplatte 44, die die drei Kraftmitnehmer 22 in Zugrichtung des Zahnriemens 20 miteinander verbindet. Dabei ist die Verbindungsplatte 44 schwenk- bzw. drehbar an dem mittleren Kraftmitnehmer 22 gelagert. Das als Achsstummel ausgebildete Verbindungselement 38 erstreckt sich durch eine kreisförmige Öffnung 46 in der Verbindungsplatte.

Die Verbindungsplatte 44 weist weiterhin zwei gekrümmte Langlöcher 48 auf, in die sich jeweils ein Verbindungselement 38 des benachbarten Kraftmitnehmers 22 hinein erstreckt. Die gekrümmten Langlöcher 48 ermöglichen ein Verschwenken der Verbindungsplatte 44 während der Richtungsänderung durch die Zahnscheibe 26. Gleichzeitig bewirkt die Verbindungsplatte 44, dass Kräfte auf die drei Kraftmitnehmer 22 verteilt werden und gleichzeitig die Spannung des Zahnriemens 20 unverändert bleibt. Das Verbindungselement 38 des mittleren Kraftmitnehmers 22 dient als einziger Kraftangriffspunkt zur Anbindung eines anzutreibenden, nicht gezeigten Elements.

Die Erfindung ist nicht auf die beschriebenen Ausführungsbeispiele beschränkt, sondern umfasst auch weitere Ausführungsvarianten, die durch die Patentansprüche gedeckt sind. Insbesondere können anstelle von drei Kraftmitnehmern 22 auch mehr Kraftmitnehmer 22 vorgesehen sein. Denkbar ist auch eine beidseitige Anordnung von Verbindungsplatten 44 an den Kraftmitnehmern 22.

## Patentansprüche

1. Zahnriemenantrieb, aufweisend
- einen Zahnriemen (20),
- mindestens einen am Zahnriemen (20) befestigten Kraftmitnehmer (22),
- eine Zahnscheibe (26) mit Zahnaussparungen (40) zur Mitnahme von Zähnen des Zahnriemens (20) und Kraftmitnehmeraussparungen (42) zur Mitnahme des mindestens einen Kraftmitnehmers (22),
wobei der Kraftmitnehmer (22) ein Verbindungselement (38) ausbildet, das mit einem anzutreibenden Element verbindbar ist,
**dadurch gekennzeichnet, dass** mindestens zwei Kraftmitnehmer (22) vorgesehen sind, die über eine Verbindungsplatte (44) miteinander verbunden sind, wobei die Verbindungsplatte (44) an einem ersten Kraftmitnehmer (22) schwenkbar gelagert ist und ein gekrümmtes Langloch (48) aufweist, in das sich ein Kraftübertragungsabschnitt des zweiten Kraftmitnehmers (22) hinein erstreckt.

2. Zahnriemenantrieb nach Anspruch 1, **dadurch gekennzeichnet, dass** der Kraftmitnehmer (22) über eine Klemmverbindung mit dem Zahnriemen (20) verbunden ist.

3. Zahnriemenantrieb nach Anspruch 2, **dadurch gekennzeichnet, dass** der Kraftmitnehmer (22) zweiteilig ausgebildet ist und ein im Befestigungszustand auf einer Innenseite (28) des Zahnriemens (20) angeordnetes Unterteil (32) und ein auf einer Außenseite (24) des Zahnriemens (20) angeordnetes Oberteil (30) aufweist, die derart miteinander verbindbar sind, dass sie den Zahnriemen (20) zwischen sich einklemmen.

4. Zahnriemenantrieb nach Anspruch 3, **dadurch gekennzeichnet, dass** das Oberteil (30) und das Unterteil (32) im befestigten Zustand miteinander verschraubt sind.

5. Zahnriemenantrieb nach einem der Ansprüche 2 bis 4, **dadurch gekennzeichnet, dass** der Kraftmitnehmer (22) eine Länge, die im befestigten Zustand parallel zu einer Breite (B) des Zahnriemens (20) verläuft, aufweist, die die Breite (B) des Zahnriemens (20) übersteigt, wobei das Unterteil (32) und das Oberteil (30) über Verbindungsmittel (34) miteinander verbunden sind, die seitlich neben dem Zahnriemen (20) verlaufen.

6. Zahnriemenantrieb nach einem der Ansprüche 1 bis 5, **dadurch gekennzeichnet, dass** der Kraftmitnehmer (22) einen als Achsstummel ausgebildeten zylinderförmigen Überstand als Verbindungselement (38) aufweist.

7. Zahnriemenantrieb nach Anspruch 6, **dadurch gekennzeichnet, dass** der zylinderförmige Überstand ein freies Ende des Kraftmitnehmers (22) ausbildet, dass quer zu einer Längserstreckung (X-X) des Zahnriemens (20) übersteht.

8. Zahnriemenantrieb nach Anspruch 7, **dadurch gekennzeichnet, dass** der Kraftmitnehmer (22) zwei, jeweils endseitig seitlich gegenüber der Breite (B) des Zahnriemens (20) vorstehende Verbindungselemente (38) aufweist.

9. Zahnriemenantrieb nach einem der Ansprüche 1 bis 8, **dadurch gekennzeichnet, dass** eine ungerade Anzahl an Kraftmitnehmern (22) über die Verbindungsplatte (44) miteinander verbunden ist, wobei der mittlere Kraftmitnehmer (22) schwenkbar mit der Verbindungsplatte (44) verbunden ist und sich Kraftübertragungsabschnitte der benachbarten Kraftmitnehmer (22) jeweils in gekrümmte Langlöcher (48) der Verbindungsplatte (44) erstrecken.

10. Zahnriemenantrieb nach einem der Ansprüche 1 bis 9, **dadurch gekennzeichnet, dass** Verbindungselemente (38) der Kraftmitnehmer (22) die Kraftübertragungsabschnitte ausbilden.

## Claims

1. A belt drive, having
- a toothed belt (20),
- at least one driving element (22) fastened to the toothed belt (20),
- a toothed pulley (26) having tooth cut-outs (40) for driving teeth of the toothed belt (20) and driving element cut-outs (42) for driving the at least one driving element (22),
the driving element (22) forming a connecting element (38) which can be connected to an element to be driven,
**characterised in that** at least two driving elements (22) are provided, which are connected to one another via a connecting plate (44), wherein the connecting plate (44) is mounted pivotably on a first driving element (22) and has a curved slot (48) into which a force-transmitting section of the second driving element (22) extends.

2. The belt drive according to Claim 1, **characterised in that** the driving element (22) is connected to the toothed belt (20) via a clamping connection.

3. The belt drive according to Claim 2, **characterised in that** the driving element (22) is in two parts and has a lower part (32), which is arranged on an inner side (28) of the toothed belt (20) when in the fastened state, and an upper part (30), which is arranged on an outer side (24) of the toothed belt (20), said parts being connectable to one another such that they clamp the toothed belt (20) between them.

4. The belt drive according to Claim 3, **characterised in that** the upper part (30) and the lower part (32) are screw-fastened to one another when in the fastened state.

5. The belt drive according to one of Claims 2 to 4, **characterised in that** the driving element (22) has a length which runs parallel to a width (B) of the toothed belt (20) when in the fastened state and exceeds the width (B) of the toothed belt (20), wherein the lower part (32) and the upper part (30) are connected to one another via connecting means (34) which run laterally next to the toothed belt (20).

6. The belt drive according to one of Claims 1 to 5, **characterised in that** the driving element (22) has a cylindrical protrusion in the form of a bearing journal as the connecting element (38).

7. The belt drive according to Claim 6, **characterised in that** the cylindrical protrusion forms a free end of the driving element (22) which protrudes transversely to a longitudinal extent (X-X) of the toothed belt (20).

8. The belt drive according to Claim 7, **characterised in that** the driving element (22) has two connecting elements (38) which each project at the end laterally relative to the width (B) of the toothed belt (20).

9. The belt drive according to one of Claims 1 to 8, **characterised in that** an odd number of driving elements (22) are connected to one another via the connecting plate (44), wherein the middle driving element (22) is connected pivotably to the connecting plate (44), and force-transmitting sections of the adjacent driving elements (22) each extend into curved slots (48) in the connecting plate (44).

10. The belt drive according to one of Claims 1 to 9, **characterised in that** connecting elements (38) of the driving elements (22) form the force-transmitting sections.

## Revendications

1. Entraînement par courroie dentée, comportant :
- une courroie dentée (20),
- au moins un entraîneur par transmission de force (22) fixé à la courroie dentée (20),
- une poulie dentée (26) avec des évidements dentés (40) pour entraîner des dents de courroie dentée (20) et des évidements d'entraîneurs par transmission de force (42) pour entraîner au moins un entraîneur par transmission de force (22),
sachant que l'entraîneur par transmission de force (22) constitue un élément de liaison (38), qui peut être relié à un élément à entraîner,
**caractérisé en ce qu'**au moins deux entraîneurs par transmission de force (22) sont prévus, qui sont reliés entre eux par une plaque de liaison (44), sachant que la plaque de liaison (44) est logée pouvant pivoter sur un premier entraîneur par transmission de force (22) et comporte un trou oblong courbe (48) dans lequel s'étend une section de transmission de force du deuxième entraîneur par transmission de force (22).

2. Entraînement par courroie dentée selon la revendication 1, **caractérisé en ce que** l'entraîneur par transmission de force (22) est relié à la courroie dentée (20) par une liaison par serrage.

3. Entraînement par courroie dentée selon la revendication 2, **caractérisé en ce que** l'entraîneur par transmission de force (22) est constitué en deux parties et comporte une partie inférieure (32) disposée à l'état de fixation sur un côté intérieur (28) de la courroie dentée (20) et une partie supérieure (30) disposée sur un côté extérieur (24) de la courroie dentée (20), qui peuvent être reliées entre elles de telle manière qu'elles enserrent entre elles la courroie dentée (20).

4. Entraînement par courroie dentée selon la revendication 3, **caractérisé en ce que** la partie supérieure (30) et la partie inférieure (32) sont vissées l'une à l'autre à l'état fixé.

5. Entraînement par courroie dentée selon l'une quelconque des revendications 2 à 4, **caractérisé en ce que** l'entraîneur par transmission de force (22) comporte une longueur, qui passe à l'état fixé parallèle à une largeur (B) de la courroie dentée (20), qui dépasse la largeur (B) de la courroie dente (20), sachant que la partie inférieure (32) et la partie supérieure (30) sont reliées entre elles par des moyens de liaison (34), qui passent latéralement près de la courroie dentée (20).

6. Entraînement par courroie dentée selon l'une quelconque des revendications 1 à 5, **caractérisé en ce que** l'entraîneur par transmission de force (22) comporte une pièce en saillie cylindrique constituée comme un tourillon en tant qu'élément de liaison (38).

7. Entraînement par courroie dentée selon la revendication 6, **caractérisé en ce que** la pièce en saillie cylindrique constitue une extrémité libre de l'entraîneur par transmission de force (22), en surplomb transversalement par rapport à une extension longitudinale (X-X) de la courroie dentée (20).

8. Entraînement par courroie dentée selon la revendication 7, **caractérisé en ce que** l'entraîneur par transmission de force (22) comporte deux éléments de liaison (38) faisant respectivement saillie en extrémité latéralement par rapport à la largeur (B) de la courroie dentée (20).

9. Entraînement par courroie dentée selon l'une quelconque des revendications 1 à 8, **caractérisé en ce qu'**un nombre impair d'entraîneurs par transmission de forces (22) sont reliés entre eux par la plaque de liaison (44), sachant que l'entraîneur par transmission de force (22) central est relié pouvant pivoter à la plaque de liaison (44) et des sections de transmission de force des entraîneurs par transmission de forces (22) voisins s'étendent respectivement dans les trous oblongs courbes (48) de la plaque de liaison (44).

10. Entraînement par courroie dentée selon l'une quelconque des revendications 1 à 9, **caractérisé en ce que** les éléments de liaison (38) des entraîneurs par transmission de forces (22) constituent les sections de transmission de force.
